# EUROPÄISCHE PATENTSCHRIFT

(11) **EP 4 019 377 B1**
(45) Veröffentlichungstag und Bekanntmachung des Hinweises auf die Patenterteilung: **07.02.2024**
(21) Anmeldenummer: 21213326.8
(22) Anmeldetag: 09.12.2021
(51) Int. Cl.: B62J 17/06

(54) **VORRICHTUNG ZUM SCHUTZ DES FAHRERS EINES FAHRRADS VOR KÄLTE- UND/ODER REGEN**
DEVICE FOR PROTECTING A PERSON RIDING A BICYCLE FROM COLD AND / OR RAIN
DISPOSITIF DE PROTECTION D'UN UTILISATEUR D'UNE BICYCLETTE CONTRE LE FROID ET/OU LA PLUIE

(30) Priorität: 22.12.2020 DE 102020216504; 26.01.2021 DE 102021200646
(43) Veröffentlichungstag der Anmeldung: 29.06.2022
(73) Patentinhaber: Pelka, Milena, 69123 Heidelberg (DE)
(72) Erfinder: Pelka, Milena, 69123 Heidelberg (DE)
(74) Vertreter: Ullrich & Naumann PartG mbB

(56) Entgegenhaltungen:
- CN-U- 203 318 578
- FR-A- 1 182 834
- IT-A1- RM20 110 326
- JP-U- S5 825 287
- JP-U- H03 121 991
- JP-U- S51 160 336

## Beschreibung

Die Erfindung betrifft eine Vorrichtung zum Schutz des Fahrers eines Fahrrads vor Kälte- und/oder Regen.

Entsprechende Vorrichtungen zum Schutz vor Kälte bzw. Regen sind in den unterschiedlichsten Ausgestaltungen vorbekannt. Hierbei kann es sich im einfachsten Fall beispielsweise um einen Regenmantel, einen Regenponcho oder ein ähnliches Kleidungsstück handeln. Solche Kleidungsstücke weisen jedoch den Nachteil auf, dass diese den Fahrer des Fahrrads entweder im Beinbereich kaum schützen, weil die Kleidungsstücke zu kurz sind, oder die Kleidungsstücke erstrecken sich bis über die Beine, stören dann jedoch bei der Betätigung der Pedale. Auch Überziehosen aus wasserabweisendem oder wasserdichtem Material weisen den Nachteil auf, dass diese die Bewegungsfreiheit zumindest teilweise einschränken. Zusätzlich sind diese umständlich in der Handhabung und durch den direkten Körperkontakt unkomfortabel zu tragen.

Des Weiteren ist aus der EP 3 219 215 B1 ein Wetterschutz für den Beinbereich vorbekannt. Dieser besteht aus einem als Regenschutz dienen Gewebe, das der Fahrradfahrer über einen Gürtel an sich befestigt und das des Weiteren an der Lenkstange festgelegt werden kann. Diese Vorrichtung bietet jedoch nur einen unzureichenden Schutz vor Regen, ein Kälteschutz wird nicht realisiert.

Des Weiteren zeigen die Dokumente WO 2017/074186 A1, DE 195 37 171 A1 und DE 100 53 765 A1 ponchoartig ausgebildete Vorrichtungen, die jedoch den Beinbereich des Fahrradfahrers kaum vor Regen und Kälte schützen.

Der vorliegenden Erfindung liegt daher die Aufgabe zugrunde, eine Vorrichtung zum Schutz des Fahrers eines Fahrrads vor Kälte- und/oder Regen derart auszugestalten und weiterzubilden, dass mit konstruktiv einfachen Mitteln ein effektiver Schutz im Beinbereich bei geringster Einschränkung der Bewegungsfreiheit realisiert ist.

JPS51160336U offenbart die Merkmale des Oberbegriffes des Anspruchs 1.

Erfindungsgemäß wird die voranstehende Aufgabe durch die Merkmale des Anspruches 1 gelöst. Damit ist eine Vorrichtung zum Schutz des Fahrers eines Fahrrads vor Kälte- und/oder Regen beansprucht, mit einem Gurtelement zum Festlegen an dem Rumpf des Fahrers und einem mit dem Gurtelement verbundenen Schutzkörper, wobei an einem Frontbereich des Schutzkörpers mindestens ein Fixierungselement angeordnet ist, um den Schutzkörper mit dem Fahrrad zu verbinden und wobei sich der Schutzkörper um mindestens 180°, vorzugsweise mindestens um 270°, um den Rumpf des Fahrers herum erstreckt und wobei mindestens eine flexible Strebe angeordnet ist und wobei die Strebe die Form einer Acht aufweist und sich im Frontbereich überkreuzt.

In erfindungsgemäßer Weise ist zunächst erkannt worden, dass die zugrunde liegende Aufgabe in verblüffend einfacher Weise gelöst werden kann, indem ein Schutzkörper ausgebildet ist, der sich von dem Rumpf des Fahrradfahrers ausgehend über die Beine hinweg erstreckt. In weiter erfindungsgemäßer Weise verläuft der Schutzkörper um mindestens 180°, vorzugsweise um mindestens 270° um den Rumpf des Fahrradfahrers herum. Dadurch werden die Beine nahezu allseitig vor Regen und Kälte geschützt, wobei aufgrund der Möglichkeit, den Schutzkörper an seinem Frontbereich an dem Fahrrad, beispielsweise einem Oberrohr, einem Unterrohr oder der Lenkstange bzw. dem Lenker, zu fixieren, die Bewegungsfreiheit des Fahrers allenfalls geringfügig eingeschränkt wird. In vorteilhafter Weise ist der Schutzkörper dabei zumindest im Wesentlichen flexibel ausgebildet. Des Weiteren ist es von besonderem Vorteil, wenn der Schutzkörper zumindest im Wesentlichen formstabil ausgebildet ist und somit während der Nutzung, insbesondere weder durch die Bewegungen des Fahrers noch durch Wind, nicht derart verformbar ist, dass die Beinfreiheit eingeschränkt ist. Insbesondere zur Befestigung der Vorrichtung an einem Lastenrad ist es von Vorteil, wenn mindestens ein Fixierungselement derart angeordnet ist, dass dieses mit der Lenkstange bzw. dem Lenker des Lastenrads verbindbar ist.

Der Begriff "Fahrrad" ist in der hier vorliegenden Offenbarung im weitesten Sinne zu verstehen und umfasst insbesondere auch E-Bikes, Pedelecs, Lastenfahrräder etc.

Um einen besonders zuverlässigen Schutz vor Regen bzw. Nässe zu realisieren, kann der Schutzkörper aus einem vorzugsweise wasserdichten und/oder wasserabweisenden Gewebe oder aus einer Folie ausgebildet sein. Das Gewebe bzw. die Folie kann hierzu beispielsweise mit einer Imprägnierung versehen sein. Bei einem wasserdichten Gewebe bzw. einer wasserdichten Folie könnte dieses/diese beispielsweise bei einem "hydrostatischen Wasserdruckversuch" einer Wassersäule von mindestens 800mm standhalten. Zur Verbesserung des Schutzes gegen Kälte könnte der Schutzkörper an seiner dem Fahrer zugewandten Seite eine Fütterung, beispielsweise aus einem Vlies oder ähnlichem aufweisen. In besonders vorteilhafter Weise könnte das Gewebe zumindest teilweise aus eine recycelten Material und/oder aus einem unter dem Aspekt der Nachhaltigkeit erzeugten Stoff bestehen.

In vorteilhafter Weise kann der Schutzkörper zwei Seitenelemente aufweisen, die vorzugsweise im Frontbereich miteinander verbunden sind, beispielsweise miteinander vernäht sind. Die Seitenteile können auch aus einem einzigen Gewebe oder aus einer einzigen Folie bestehen, d.h. die Seitenteile können auch als einteiliges Element ausgebildet sein. Dabei kann mindestens die flexible Strebe aus Metall und/oder Kunststoff, insbesondere aus Federstahl bzw. einem Federstahlband, angeordnet sein, wobei sich die Strebe, vorzugsweise zumindest im Wesentlichen in Umfangsrichtung, von einem Seitenelement zu dem weiteren Seitenelement erstrecken kann. Dadurch wird erreicht, dass der Schutzkörper formstabil ausgebildet ist, so dass dieser allenfalls geringfügig mit den Beinen des Fahrers in Berührung kommt. Bevorzugt verlaufen die Streben derart, dass der Schutzkörper den Körper des Fahrers kaum oder gar nicht berührt, so dass die Vorrichtung beim Fahren des Fahrrads in keiner Weise stört, den Fahrer aber vor Kälte und Nässe schützt. Somit wird ein hohes Maß an Bewegungsfreiheit ermöglicht. Die Strebe kann ähnlich einer Zeltstange ausgebildet sein, so dass der Schutzkörper von der Strebe aufgespannt wird. Des Weiteren ist es denkbar, dass die Strebe in den Schutzkörper zumindest bereichsweise eingenäht ist oder auf eine andere Art mit diesem verbunden ist. Alternativ oder zusätzlich kann mindestens eine Strebe angeordnet sein, die sich lediglich teilweise oder komplett über ein einzelnes Seitenelement hinweg erstreckt. Unabhängig davon, ob die Strebe über einen Seitenteil oder über beide Seitenteil verläuft, ist es von Vorteil, wenn die Strebe zumindest im Wesentlichen in Umfangsrichtung der Vorrichtung verläuft, wodurch ein besonders stabiler Schutzkörper aufspannbar ist. Auch ist es dadurch möglich, den Schutzkörper flexibel auszubilden.

Erfindungsgemäß ist die Strebe derart angeordnet, dass sie in Form einer Acht ausgebildet ist, wobei sich die Schleifen im Frontbereich überkreuzen. Mit anderen Worten kann die Strebe geschlossen ausgebildet sein und zwei Schleifen aufweisen, wobei sich die Strebe im Frontbereich überkreuzt. Die Schleifen der Strebe können sich über die Seitenteile hinweg erstrecken, vorzugsweise bis zu den jeweiligen Enden der Seitenteile. Dies hat den Vorteil, dass eine zeltartige Konstruktion geschaffen ist und die Vorrichtung die Beine des Fahrers beim Betätigen der Pedale nicht berührt.

Der Schutzkörper kann im Bereich der Streben verstärkt ausgebildet sein, beispielsweise durch ein festes Gurtmaterial oder ähnliches, um eine Beschädigung des Schutzkörpers durch die unter Spannung gehaltenen Streben zu vermeiden. Alternativ oder zusätzlich können die Streben an ihren Enden mit Kappen versehen sein und/oder mit einem weichen Material, beispielsweise einem Polstermaterial, umschlossen sein, so dass Beschädigungen des Schutzkörpers vermieden werden.

In besonders vorteilhafter Weise kann der Schutzkörper zwei Seitenteile aufweisen, wobei sich die Seitenteile jeweils von dem Steuerrohr des Fahrrads bis mindestens zu dem Sitzrohr des Fahrrads erstrecken. Dadurch ist der Fahrer auch seitlich von dem Schutzkörper umgeben. Des Weiteren ist es denkbar, dass die Seitenteile derart miteinander im Frontbereich verbunden sind, dass ein Seitenteil zumindest geringfügig aufklappbar ist, so dass der Fahrer zwischen die Seitenteile "einschlüpfen" kann. Eine solche Konstruktion hat den Vorteil, dass die Vorrichtung mit dem Fahrrad verbunden sein kann, während sie von dem Fahrer angelegt oder abgelegt wird.

Gemäß einer weiteren vorteilhaften Ausgestaltung kann der Schutzkörper an seinem Frontbereich einen Schlitz zur Aufnahme eines Oberrohrs und/oder eines Unterrohrs des Fahrrads aufweisen. Dadurch ist die Vorrichtung an unterschiedliche Fahrradtypen anpassbar und ist des Weiteren sichergestellt, dass der Fahrer im Frontbereich und seitlich vor Regen und Kälte geschützt ist. Zusätzlich ist es denkbar, dass an dem Schlitz Verschlussmittel ausgebildet sind, beispielsweise ein Klettverschluss, ein Magnetverschluss oder ein Klick-Verschluss. Somit kann der Schlitz verschlossen werden, falls das Fahrrad kein Oberrohr und/oder Unterrohr aufweist. Auch ist es möglich, den Schlitz um das Oberrohr und/oder Unterrohr herum zu verschließen. In diesem Fall können die Verschlussmittel als in dem Frontbereich angeordnete Fixierungselement zum Befestigen der Vorrichtung an dem Fahrrad dienen, wie sie mit Anspruch 1 beschrieben sind.

Zu Gewährleistung eines besonders guten Schutzes des Beinbereichs kann sich der Schutzkörper zumindest über zwei Drittel der Länge des Sitzrohres erstreckt.

In weiter vorteilhafter Weise können an dem Gurtelement Verschlussmittel ausgebildet sein, beispielsweise ein Klettverschluss, ein Magnetverschluss, ein Klick-Verschluss etc. Ein Magnetverschluss hat den Vorteil, dass sich dieser bei Überschreitung einer durch die Magnete definierbaren Kraft öffnet, so dass sich das Gurtelement beispielsweise im Falle eines Sturzes selbstständig öffnen kann. Unabhängig von der Ausgestaltung der Verschlussmittel kann die Vorrichtung wie folgt von dem Fahrer angelegt werden: Der Fahrer kann beispielsweise ein Seitenteil des an dem Fahrrad befestigten Schutzkörpers aufklappen und zwischen die Seitenteile "schlüpfen". Sodann kann das Gurtelement umgelegt und über die Verschlussmittel arretiert werden. Dabei ist es von Vorteil, wenn das Gurtelement längenverstellbar ist, beispielsweise indem die Verschlussmittel über einen Schieber an dem Gurtelement angeordnet sind.

Um eine Diebstahlsicherung zu realisieren, ist es denkbar, dass an dem Schutzkörper und/oder an dem Gurtelement Aufnahmemittel, beispielsweise eine Öse, für ein Sicherungsmittel, beispielsweise ein Schloss ausgebildet sind. Dadurch ist es möglich, die Vorrichtung an dem Fahrrad zu belassen, so dass dieses zumindest teilweise vor Umwelteinflüssen geschützt ist. Alternativ oder zusätzlich ist es denkbar, dass ein bandartiges oder seilartiges Befestigungsmittel angeordnet ist, um die Vorrichtung bei Nichtbenutzung an dem Fahrradsattel zu befestigen. Das Befestigungsmittel kann flexibel ausgebildet sein und/oder könnte im Bereich des Gurtelements angeordnet sein. Somit kann die Vorrichtung bei Nichtbenutzung über den Sattel gezogen und in dieser Position festgelegt werden, so dass der Sattel vor Regen geschützt ist.

Gemäß einer weiteren bevorzugten Ausgestaltung kann an einem Rand des Schutzkörpers zumindest bereichsweise ein plastisch verformbares Element angeordnet sein, insbesondere eine Strebe, vorzugsweise am vorderen Bereich des Schutzkörpers, beispielsweise im Bereich des Schlitzes. Die Strebe kann beispielsweise aus Metall oder aus einem anderen plastisch verformbaren Material ausgebildet sein, vorzugsweise kann es sich um einen Draht handeln. Eine solche Konstruktion hat den Vorteil, dass die Schutzeinrichtung in ihrem Randbereich entsprechend den Abmessungen des Fahrers und des Fahrrads händisch angepasst werden kann. Dabei ist es auch denkbar, dass eine Materialerweiterung, beispielsweise eine Gewebeerweiterung, in dem Bereich des Schutzkörpers vorgesehen ist, in dem das plastisch verformbare Element verläuft. Dadurch lässt sich die Schutzkörper in diesem Bereich nach vorne oder seitlich durch Verbiegen des plastisch verformbaren Elements erweitern, so dass ein optimaler Schutz der Füße gegeben ist. Durch die Anordnung von einem Verschlussmittel an einem im Frontbereich ausgebildeten Schlitz und/oder durch Fixierungselemente kann das plastisch verformbare Element versteift bzw. verfestigt werden, wenn die Vorrichtung mit dem Fahrrad verbunden ist.

In einer weiter vorteilhaften Ausgestaltung kann mindestens eine Aufnahme für ein Wärmepad, beispielsweise ein über USB aufladbares Wärmepad, an dem Gurtelement und/oder dem Schutzkörper ausgebildet sein. Somit wird eine Beheizung der Vorrichtung ermöglicht, so dass ein verbesserter Kälteschutz realisierbar ist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine Seitenansicht einer erfindungsgemäßen Vorrichtung,
- Fig. 2: in einer schematischen Darstellung eine Vorderansicht der Vorrichtung gemäß Fig. 1,
- Fig. 3: in einer schematischen Darstellung eine Rückansicht der Vorrichtung gemäß Fig. 1,
- Fig. 4a: in einer schematischen Darstellung eine Aufsicht der Vorrichtung gemäß Fig. 1 in einer ersten Größeneinstellung,
- Fig. 4b: in einer schematischen Darstellung eine Aufsicht der Vorrichtung gemäß Fig. 1 in einer weiteren Größeneinstellung,
- Fig. 5: in einer schematischen Darstellung eine perspektivische Ansicht der Vorrichtung gemäß Fig. 1, die von einem Fahrer getragen wird,
- Fig. 6: in einer schematischen Darstellung eine perspektivische Ansicht der Vorrichtung gemäß Fig. 1 in einem zusammengelegten Zustand,
- Fig. 7: in einer schematischen Darstellung eine perspektivische Ansicht der Vorrichtung gemäß Fig. 1 in einem weiteren zusammengelegten Zustand,
- Fig. 8: in einer schematischen Darstellung eine perspektivische Ansicht der Vorrichtung gemäß Fig. 1 in einem weiteren zusammengelegten Zustand,
- Fig. 9: in einer schematischen Darstellung eine perspektivische Ansicht der Vorrichtung gemäß Fig. 1 in einem weiteren zusammengelegten Zustand,
- Fig. 10: in einer schematischen Darstellung eine perspektivische Ansicht der Vorrichtung gemäß Fig. 1 in einem weiteren zusammengelegten Zustand,
- Fig. 11: in einer schematischen Darstellung eine Seitenansicht eines weiteren Ausführungsbeispiels einer erfindungsgemäßen Vorrichtung,
- Fig. 12: in einer schematischen Darstellung eine Vorderansicht der Vorrichtung gemäß Fig. 11, und
- Fig. 13: in einer schematischen Darstellung eine Rückansicht der Vorrichtung gemäß Fig. 11.

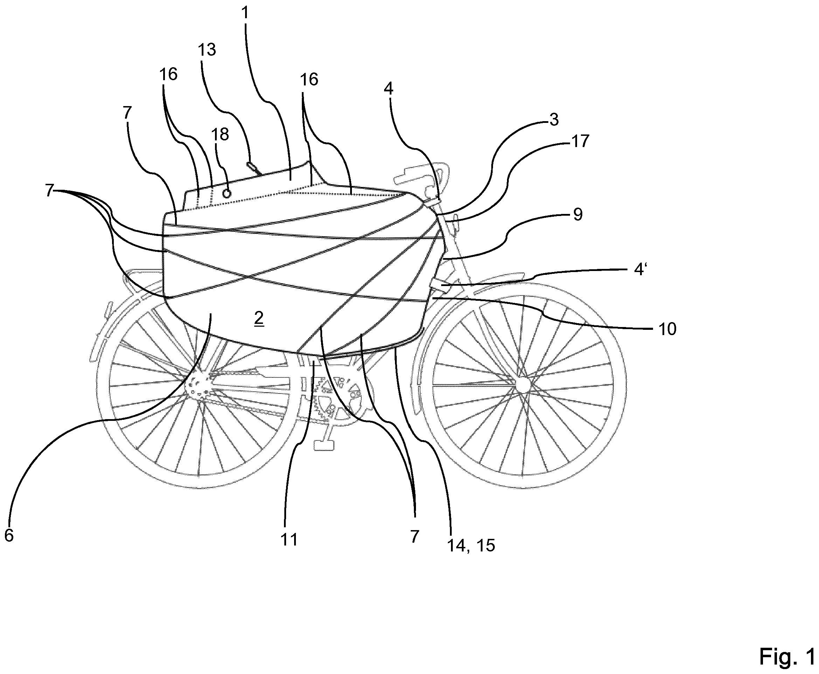

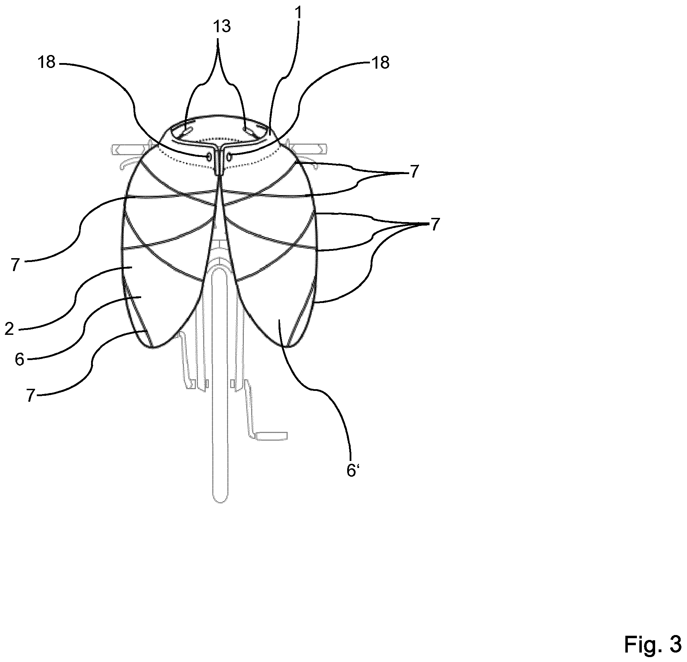

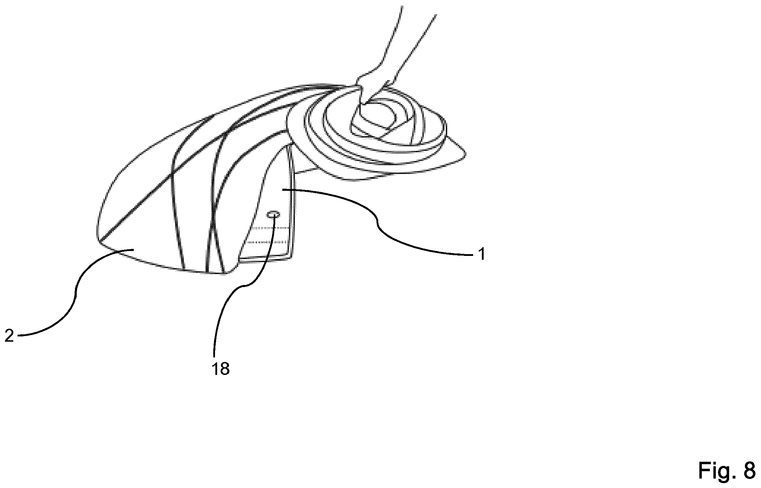

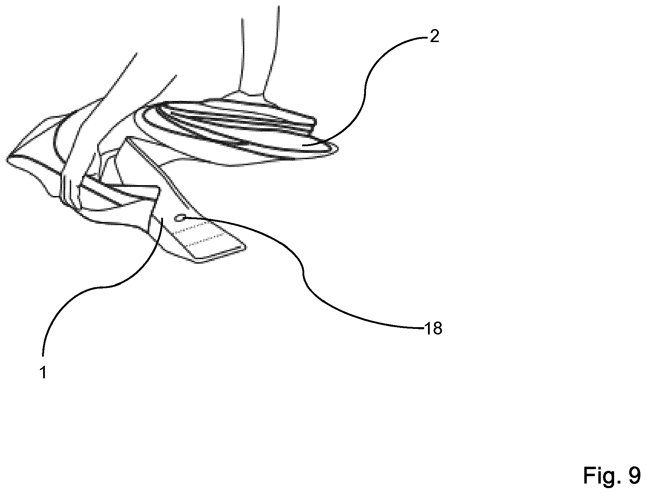

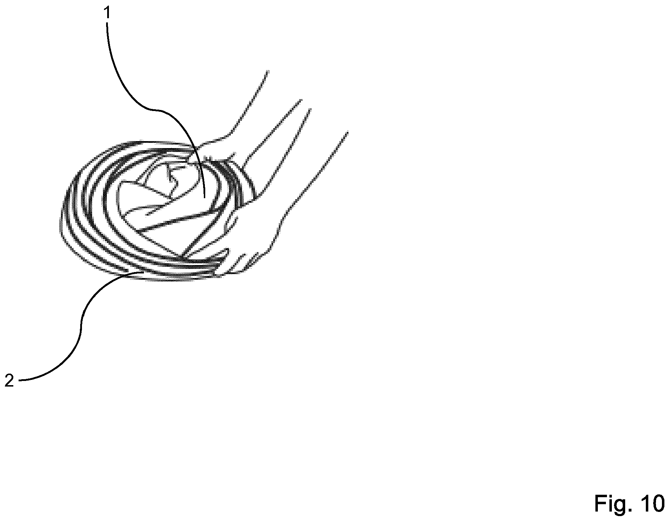

In den Figuren 1 bis 10 ist ein Ausführungsbeispiel einer erfindungsgemäßen Vorrichtung dargestellt. Zur Verbesserung der Übersichtlichkeit sind dabei nicht in allen Figuren sämtliche Elemente jeweils mit einem Bezugszeichen versehen. Diese weist ein Gurtelement 1 zum Festlegen an dem Rumpf des Fahrers auf. An dem Gurtelement 1 ist ein Schutzkörper 2 angeordnet, der teilweise flexibel ausgebildet ist.

In Fig. 1 ist deutlich zu erkennen, dass an dem Frontbereich 3 der Vorrichtung zwei Fixierungselemente 4, 4' ausgebildet sind, um die Vorrichtung an dem Fahrrad festzulegen. Das Fixierungselement 4' kann rutschhemmend ausgebildet sein, um die Vorrichtung an einem schräg verlaufenden Oberrohr/Unterrohr anzuordnen. Des Weiteren sind an dem Gurtelement 1 Verschlussmittel 5 ausgebildet. Sobald die Vorrichtung um den Rumpf des Fahrers, vorzugsweise in Höhe der Lendenwirbel, angelegt und die Verschlussmittel 5 geschlossen sind, erstreckt sich der Schutzkörper 2 nahezu vollständig um den Rumpf herum, insbesondere um mehr als 180°, vorzugsweise um mehr als 270°.

Der Schutzkörper 1 kann aus einem Gewebe, einer Folie oder ähnlichem hergestellt sein. Des Weiteren ist es denkbar, dass der Schutzkörper mehrlagig ausgebildet ist und auf seiner dem Fahrer zugewandten Seite beispielsweise zumindest bereichsweise mit einem Vlies versehen ist.

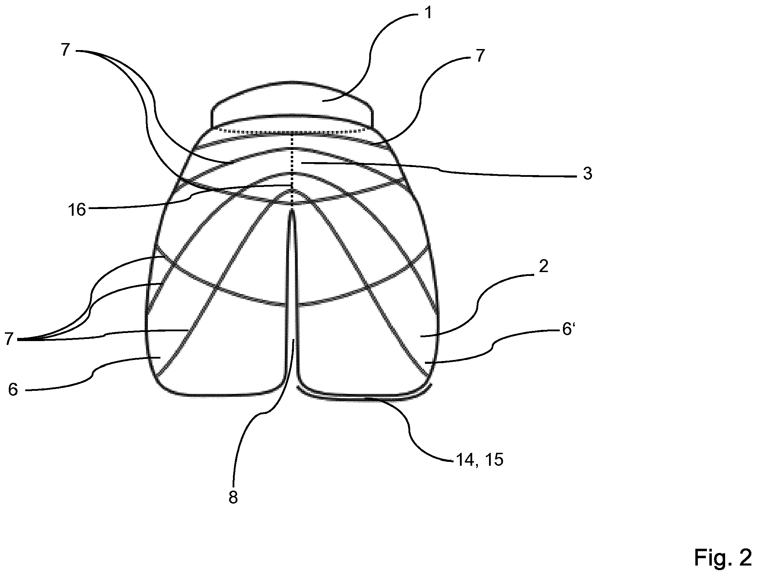

Der Schutzkörper 2 weist zwei Seitenteile 6, 6' auf, die gemäß Fig. 2 über eine Naht 16 miteinander verbunden sein können. Um die Formstabilität des Schutzkörpers 2 zu maximieren sind mehrere Streben 7 angeordnet, die sich von einem den Seitenteile 6 zu dem anderen Seitenteil 6' erstrecken, so dass eine zeltähnliche Struktur geschaffen ist. In dem Frontbereich 3 ist ein Schlitz 8 ausgebildet, der vorzugsweise über Verschlussmittel, insbesondere ein Klettverschluss, verschließbar ist. Der Schlitz 8 dient zur Aufnahme eines Oberrohrs 9 bzw. Unterrohrs 10 des Fahrrads. Sofern kein Oberrohr/Unterrohr vorhanden ist, kann der Schlitz 8 verschlossen bleiben. Insgesamt ist die Vorrichtung somit in idealer Weise an unterschiedliche Fahrradtypen anpassbar. Des Weiteren können die Verschlussmittel als an dem Frontbereich 3 angeordnetes Fixierungselement dienen, wenn der Schlitz 8 um ein Oberrohr 9 und/oder ein Unterrohr 10 herum befestigt wird. Somit ist es nicht zwangsweise notwendig, die dargestellten Fixierungselemente 4, 4' zu realisieren, kann hierzu nämlich der verschließbare Schlitz 8 dienen.

Insbesondere aus Fig. 1 geht hervor, dass sich der Schutzkörper 2 bzw. die Seitenteile 6, 6' in vertikaler Richtung bis über zwei Drittel der Länge des Sitzrohres 11 erstreckt/erstrecken. Des Weiteren verläuft der Schutzkörper 2 bzw. die Seitenteile 6, 6' zumindest im Wesentlichen von dem Steuerrohr 17 des Fahrrads bis zu dem Sitzrohr 11 des Fahrrads. Dadurch werden die Beine des Fahrers in idealer Weise vor Kälte und Nässe geschützt.

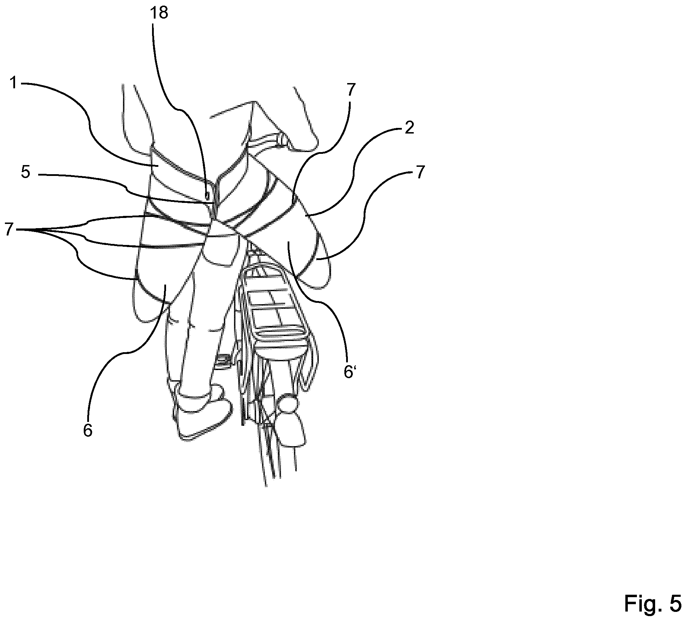

In Fig. 5 ist deutlich zu erkennen, dass die Vorrichtung den Sattel des Fahrrads auch dann abdeckt, wenn der Fahrer neben dem Fahrrad steht. Somit wird beispielsweise während das Wartens an einer Ampel der Sattel bei Regen nicht nass, was bei einem ponchoartigen Regenschutz nicht der Fall ist. Ein weiterer Vorteil der erfindungsgemäßen Vorrichtung ist, dass diese unter einer (Regen-)Jacke getragen werden kann, so dass Regenwasser vollständig abläuft und der Fahrer in idealer Weise geschützt ist.

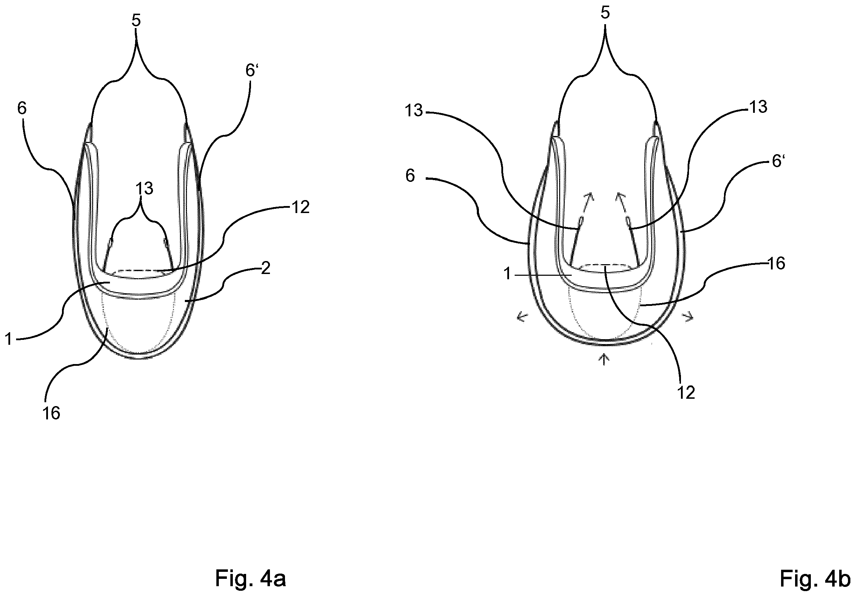

Um die Vorrichtung bei Nichtbenutzung an dem Fahrradsattel zu befestigen, ist ein bandartiges oder seilartiges Befestigungsmittel 12 angeordnet, das flexibel ausgebildet sein kann. Des Weiteren ist ein Zugmittel 13, beispielsweise ein Band, ein Seil oder eine Schnur, angeordnet, das in bzw. an dem Schoßbereich des Gurtelements 1 verläuft, beispielsweise durch einen Führungstunnel. Das Zugmittel 13 ist derart angeordnet, dass es nicht in das Gurtelement 1 hineinrutschen kann. Durch Zug an dem Zugmittel 13 wird das von dem Schutzkörper 1 eingeschlossene Volumen kugelförmiger (vgl. Fig. 4a, 4b), sodass die Beinfreiheit entsprechend den Bedürfnissen des Fahrers anpassbar ist. Das Zugmittel 13 kann in dieser Position fixierbar sein, sodass die Form bestehen bleibt.

An dem Rand 14 zumindest von einem der Seitenteile 5, 5', vorzugsweise an beiden Seitenteilen 5, 5', ist ein plastisch verformbares Element 15 angeordnet, welches dazu dient, die Form des Schutzkörpers 2 individuell auf den Fahrer anzupassen. Die Elemente 15 können beispielsweise als Draht realisiert sein. Des Weiteren sind Aufnahmemittel 18 in Form von Ösen ausgebildet, die zur Sicherung der Vorrichtung mit einem Schloss dienen.

Um den Kälte- und Regenschutz zu optimieren, können die Nähte 16 an dem Schutzkörper 2 wasserdicht verarbeitet sein. Des Weiteren ist es möglich Reflektoren an dem Schutzkörper 2 vorzusehen, um die Sichtbarkeit des Fahrers zu erhöhen.

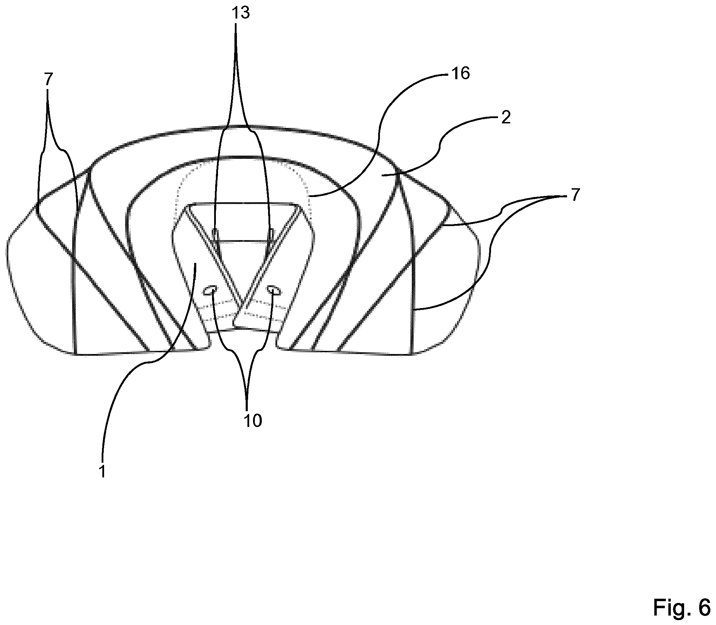

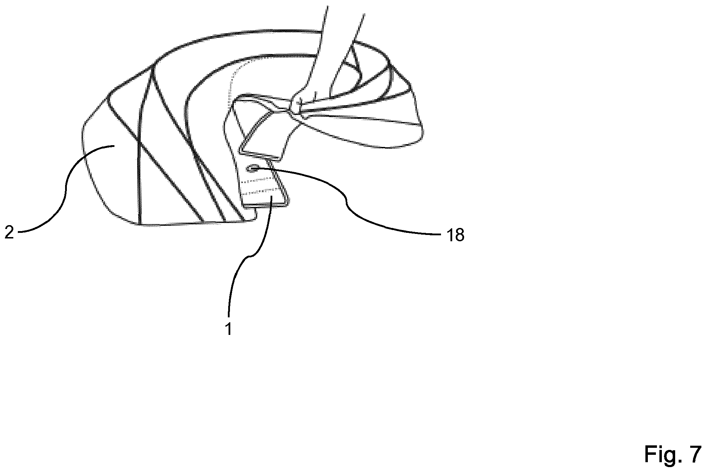

In den Fig. 6 bis 9 ist dargestellt, wie sich die Vorrichtung zusammenlegen lässt, um diese zu verstauen. Hierzu wird diese zunächst vom Fahrrad abgenommen und im Ganzen flach zusammengelegt (Abb. 6). Der Schlitz 8 kann offen, oder geschlossen sein. Die Vorrichtung faltet sich von alleine flach zusammen, wenn sie hingelegt wird oder kann von oben und unten zusammengedrückt werden. Sodann werden die beiden Seitenteile 6, 6' im Bereich der Verschlussmittel getrennt voneinander jeweils nacheinander nach innen eingedreht (Abb. 7 bis 10) und an vorgesehenen Stellen, ggf. über einen Klettverschluss fixiert.

Beim Öffnen entfaltet sich die Vorrichtung aufgrund der Streben selbstständig.

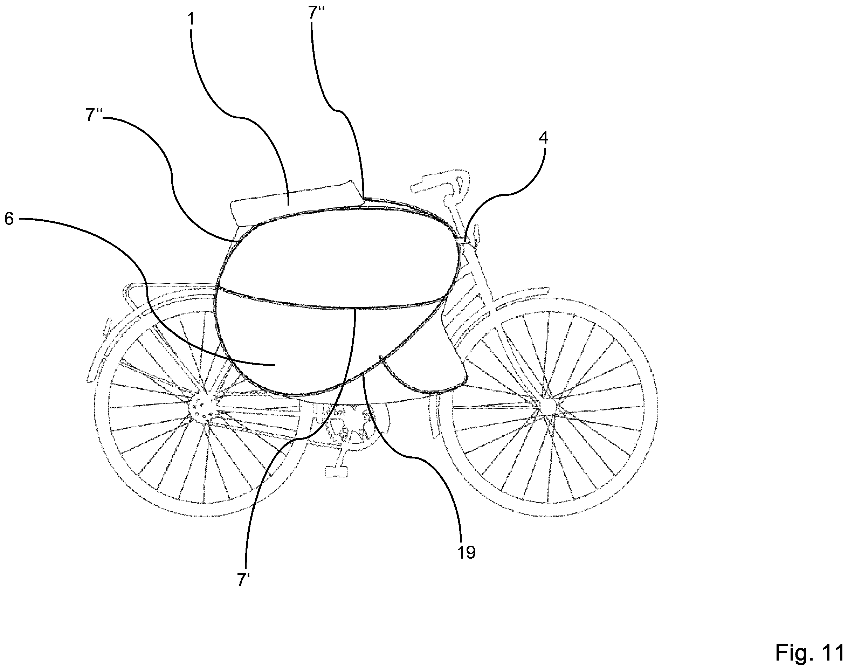

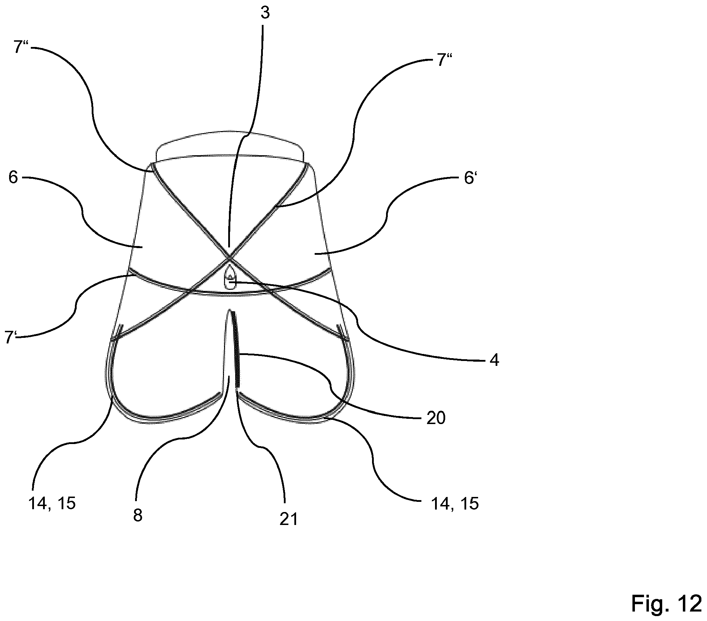

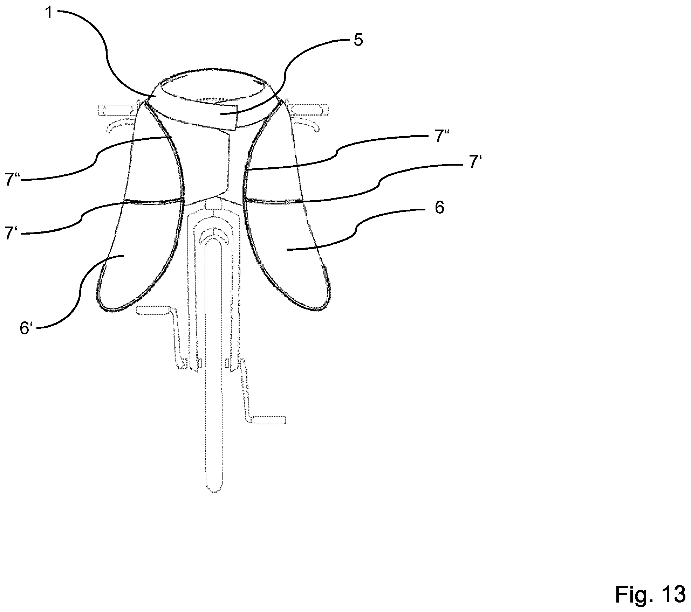

In den Fig. 11 bis 13 ist ein weiteres Ausführungsbeispiel einer erfindungsgemäßen Vorrichtung dargestellt. Diese entspricht weitestgehend dem Ausführungsbeispiel der Fig. 1 bis 10, so dass die diesbezügliche Beschreibung gilt. Der Wesentliche Unterschied besteht in der Anzahl und Anordnung der Streben 7. Dabei ist eine Strebe 7' vorgesehen, die sich von dem Seitenteil 6 in Umfangsrichtung über den Frontbereich 3 hinweg zu dem weiteren Seitenteil 6' erstreckt. Mit anderen Worten verläuft die Strebe 7' während des Gebrauchs der Vorrichtung, d.h. während des Fahrens, im Wesentlichen horizontal. Des Weiteren ist eine Strebe 7" angeordnet, die die Form einer Acht aufweist und sich im Frontbereich 3 überkreuzt. Jeweils eine der Schleifen 19 der Strebe 7" verläuft über einen der Seitenteile 6, 6' hinweg. Diese Konstruktion hat den Vorteil, dass die Vorrichtung zeltartig ausgebildet ist und eine hohes Maß an Beinfreiheit und Stabilität bei Gegenwind gewährt.

Des Weiteren ist an dem Rand 14 der Seitenteile 6, 6' jeweils ein plastisch verformbares Elemente 15 ausgebildet, so dass die Vorrichtung in diesem Bereich in idealer Weise an die Größe von Fahrer und Fahrrad anpassbar ist. Dabei ist auch zu erkennen, dass in dem Frontbereich 3 ein Schlitz 8 ausgebildet ist, der vorzugsweise über Verschlussmittel 20, insbesondere einen Klettverschluss, verschließbar ist. Der Schlitz 8 dient zur Aufnahme eines Oberrohrs 9 bzw. Unterrohrs 10 des Fahrrads.

Sofern kein Oberrohr/Unterrohr vorhanden ist, kann der Schlitz 8 verschlossen bleiben. Des Weiteren kann das Verschlussmittel 20 als an dem Frontbereich 3 angeordnetes Fixierungselement dienen, wenn der Schlitz 8 um ein Oberrohr 9 und/oder ein Unterrohr 10 herum befestigt wird. Alternativ oder zusätzlich kann ein Fixierungselement 4' angeordnet sein, wie es in Fig. 1 dargestellt ist. Beispielsweise kann das Fixierungselement 4' im Bereich des freien Endes 21 des Schlitzes 8 ausgebildet sein und durch ein Band mit einem Verschluss, insbesondere mit einem Klettverschluss oder einem Klickverschluss oder ähnlichem, verschlossen werden. Das plastische Element 15, beispielsweise ein Draht, ist somit durch das Fixierungselement 4' und/oder die Verschlussmittel 20 versteift. Hierzu ist es von Vorteil, wenn die Ränder 14 und somit die plastischen Elemente 15 durch das Fixierungselement 4' und/oder durch das Verschlussmittel 20 übereinander geschoben werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Gurtelement
- 2: Schutzkörper
- 3: Frontbereich
- 4, 4': Fixierungselement
- 5: Verschlussmittel
- 6, 6`: Seitenteil
- 7, 7', 7": Strebe
- 8: Schlitz
- 9: Oberrohr
- 10: Unterrohr
- 11: Sitzrohr
- 12: Befestigungsmittel
- 13: Zugmittel
- 14: Rand
- 15: plastisch verformbares Element
- 16: Naht
- 17: Steuerrohr
- 18: Aufnahmemittel
- 19: Schleife
- 20: Verschlussmittel
- 21: freies Ende (Schlitz)

## Patentansprüche

1. Vorrichtung zum Schutz des Fahrers eines Fahrrads vor Kälte- und/oder Regen mit einem Gurtelement (1) zum Festlegen an dem Rumpf des Fahrers und einem mit dem Gurtelement (1) verbundenen Schutzkörper (2), wobei an einem Frontbereich (3) des Schutzkörpers mindestens ein Fixierungselement (4, 4') angeordnet ist, um den Schutzkörper (2) mit dem Fahrrad zu verbinden, wobei sich der Schutzkörper (2) um mindestens 180°, vorzugsweise mindestens um 270°, um den Rumpf des Fahrers herum erstreckt,
wobei mindestens eine flexible Strebe (7, 7', 7") angeordnet ist und wobei die Strebe (7, 7', 7") die Form einer Acht aufweist und sich im Frontbereich (3) überkreuzt.

2. Vorrichtung nach Anspruch 1, **dadurch gekennzeichnet, dass** der Schutzkörper (2) aus einem vorzugsweise wasserdichten oder wasserabweisenden Gewebe ausgebildet ist.

3. Vorrichtung nach Anspruch 1 oder 2, **dadurch gekennzeichnet, dass** der Schutzkörper (2) zwei Seitenteile (6, 6') aufweist.

4. Vorrichtung nach Anspruch 3, **dadurch gekennzeichnet, dass** die Seitenteile (6, 6') im Frontbereich (3) miteinander verbunden sind, beispielsweise miteinander vernäht, oder als einteiliges Element ausgebildet sind.

5. Vorrichtung nach einem der Ansprüche 1 bis 4, **dadurch gekennzeichnet, dass** die mindestens eine flexible Strebe (7, 7', 7")aus Metall und/oder Kunststoff, insbesondere aus Federstahl bzw. einem Federstahlband, hergestellt ist.

6. Vorrichtung nach Anspruch 5, **dadurch gekennzeichnet, dass** sich die Strebe (7, 7', 7"), vorzugsweise in Umfangsrichtung, von einem Seitenteil (6, 6') zu dem weiteren Seitenteil (6, 6') erstreckt.

7. Vorrichtung nach Anspruch 5 oder 6, **dadurch gekennzeichnet, dass** die Strebe (7, 7', 7") die Form einer geschlossenen Acht aufweist.

8. Vorrichtung nach Anspruch 7, **dadurch gekennzeichnet, dass** sich jeweils eine Schleife (19) der Strebe (7, 7', 7") über ein Seitenteil (6, 6') hinweg erstreckt.

9. Vorrichtung nach einem der Ansprüche 1 bis 8, **dadurch gekennzeichnet, dass** der Schutzkörper (2) zwei Seitenteile (6, 6') aufweist, wobei sich die Seitenteile (6, 6') jeweils von dem Steuerrohr (17) des Fahrrads bis mindestens zu dem Sitzrohr (11) des Fahrrads erstrecken.

10. Vorrichtung nach einem der Ansprüche 1 bis 9, **dadurch gekennzeichnet, dass** der Schutzkörper (2) an seinem Frontbereich (3) einen Schlitz (8) zur Aufnahme eines Oberrohrs (9) und/oder eines Unterrohrs (10) des Fahrrads aufweist.

11. Vorrichtung nach Anspruch 10, **dadurch gekennzeichnet, dass** an dem Schlitz (8) Verschlussmittel ausgebildet sind, beispielsweise ein Klettverschluss, ein Magnetverschluss oder ein Klick-Verschluss.

12. Vorrichtung nach einem der Ansprüche 1 bis 11, **dadurch gekennzeichnet, dass** sich der Schutzkörper (2) zumindest über zwei Drittel der Länge des Sitzrohres (11) erstreckt.

13. Vorrichtung nach einem der Ansprüche 1 bis 12, **dadurch gekennzeichnet, dass** an dem Gurtelement (1) Verschlussmittel (5) ausgebildet sind, beispielsweise ein Klettverschluss, ein Magnetverschluss, ein Klick-Verschluss.

14. Vorrichtung nach einem der Ansprüche 1 bis 13, **dadurch gekennzeichnet, dass** an dem Schutzkörper (2) und/oder an dem Gurtelement (1) Aufnahmemittel (18), beispielsweise eine Öse, für ein Sicherungsmittel, beispielsweise ein Schloss, ausgebildet sind.

15. Vorrichtung nach einem der Ansprüche 1 bis 14, **dadurch gekennzeichnet, dass** an einem Rand (14) des Schutzkörpers (2) zumindest bereichsweise ein plastisch verformbares Element (15) angeordnet ist, insbesondere eine plastisch verformbare Strebe.

## Claims

1. Apparatus for protecting the rider of a bicycle from cold and/or rain, having a belt element (1) for securing to the torso of the rider and a protective member (2) which is connected to the belt element (1), wherein at least one fixing element (4, 4') is arranged on a front region (3) of the protective member in order to connect the protective member (2) to the bicycle, wherein the protective member (2) extends through at least through 180°, preferably at least through 270°, around the torso of the rider,
wherein at least one flexible strut (7, 7', 7") is arranged and wherein the strut (7, 7', 7") is in the form of a figure eight and crosses over itself in the front region (3).

2. Apparatus according to claim 1, **characterised in that** the protective member (2) is formed from a preferably waterresistant or water-repellent fabric.

3. Apparatus according to claim 1 or 2, **characterised in that** the protective member (2) has two side portions (6, 6').

4. Apparatus according to claim 3, **characterised in that** the side portions (6, 6') are connected to each other in the front region (3), for example, sewn to each other, or are in the form of an integral element.

5. Apparatus according to any one of claims 1 to 4, **characterised in that** the at least one flexible strut (7, 7', 7") is produced from metal and/or plastics material, in particular from spring steel or a spring steel strip.

6. Apparatus according to claim 5, **characterised in that** the strut (7, 7', 7") preferably extends in a circumferential direction from one side portion (6, 6') to the other side portion (6, 6').

7. Apparatus according to claim 5 or 6, **characterised in that** the strut (7, 7', 7") is in the form of a closed figure eight.

8. Apparatus according to claim 7, **characterised in that** a loop (19) of the strut (7, 7', 7") extends in each case over a side portion (6, 6').

9. Apparatus according to any one of claims 1 to 8, **characterised in that** the protective member (2) has two side portions (6, 6'), wherein the side portions (6, 6') extend in each case from the control tube (17) of the bicycle at least as far as the seat tube (11) of the bicycle.

10. Apparatus according to any one of claims 1 to 9, **characterised in that** the protective member (2) has in the front region (3) thereof a slot (8) for receiving an upper tube (9) and/or a lower tube (10) of the bicycle.

11. Apparatus according to claim 10, **characterised in that** closure means are formed on the slot (8), for example, a hook and loop fastening, a magnetic closure or a click closure.

12. Apparatus according to any one of claims 1 to 11, **characterised in that** the protective member (2) extends over at least two-thirds of the length of the seat tube (11).

13. Apparatus according to any one of claims 1 to 12, **characterised in that** closure means (5) are formed on the belt element (1), for example a hook and loop fastening, a magnetic closure, a click closure.

14. Apparatus according to any one of claims 1 to 13, **characterised in that** on the protective member (2) and/or on the belt element (1) receiving means (18), for example, an eyelet, are formed for a securing means, for example, a lock.

15. Apparatus according to any one of claims 1 to 14, **characterised in that** a plastically deformable element (15) is at least partially arranged on an edge (14) of the protective member (2), in particular a plastically deformable strut.

## Revendications

1. Dispositif pour la protection du conducteur d'un vélo contre le froid et/ou la pluie avec un élément de sangle (1) pour la fixation au tronc du cycliste et un corps protecteur (2) relié avec l'élément de sangle (1), dans lequel, sur une partie frontale (3) du corps protecteur, se trouve au moins un élément de fixation (4, 4'), afin de relier le corps protecteur (2) au vélo, dans lequel le corps protecteur (2) s'étend autour du tronc du cycliste sur au moins 180°, de préférence sur au moins 270°,
dans lequel au moins une entretoise flexible (7, 7', 7") est prévue et dans lequel l'entretoise (7, 7', 7") présente la forme d'un huit et s'entrecroise au niveau de la partie frontale (3).

2. Dispositif selon la revendication 1, **caractérisé en ce que** le corps protecteur (2) est constitué d'un tissu de préférence étanche à l'eau ou hydrophobe.

3. Dispositif selon la revendication 1 ou 2, **caractérisé en ce que** le corps protecteur (2) comprend deux parties latérales (6, 6').

4. Dispositif selon la revendication 3, **caractérisé en ce que** les parties latérales (6, 6') sont reliées entre elles, par exemple cousues entre elles ou réalisées d'une seule pièce, au niveau de la partie frontale (3).

5. Dispositif selon l'une des revendications 1 à 4, **caractérisé en ce que** l'au moins une entretoise flexible (7, 7', 7") est constitué de métal et/ou de matière plastique, plus particulièrement d'acier ressort ou d'une bande d'acier ressort.

6. Dispositif selon la revendication 5, **caractérisé en ce que** l'entretoise (7, 7', 7") s'étend de préférence dans la direction de la circonférence, d'une partie latérale (6, 6') vers l'autre partie latérale (6, 6').

7. Dispositif selon la revendication 5 ou 6, **caractérisé en ce que** l'entretoise (7, 7', 7") présente la forme d'un huit fermé.

8. Dispositif selon la revendication 7, **caractérisé en ce qu'**une boucle (19) de l'entretoise (7, 7', 7") s'étend par-dessus une partie latérale (6, 6').

9. Dispositif selon l'une des revendications 1 à 8, **caractérisé en ce que** le corps protecteur (2) comprend deux parties latérales (6, 6'), dans lequel les parties latérales (6, 6') s'étendent respectivement du tube de direction (17) du vélo jusqu'au moins le tube de siège (11) du vélo.

10. Dispositif selon l'une des revendications 1 à 9, **caractérisé en ce que** le corps protecteur (2) présente, au niveau de sa partie frontale (3), une fente (8) pour le logement d'un tube supérieur (9) et/ou d'un tube inférieur (10) du vélo.

11. Dispositif selon la revendication 10, **caractérisé en ce que**, au niveau de fente (8), sont prévus des moyens de fermeture, par exemple une fermeture velcro, une fermeture magnétique ou une fermeture par encliquetage.

12. Dispositif selon l'une des revendications 1 à 11, **caractérisé en ce que** le corps protecteur (2) s'étend sur au moins deux tiers de la longueur du tube de siège (11).

13. Dispositif selon l'une des revendications 1 à 12, **caractérisé en ce que**, au niveau de l'élément de sangle (1), sont prévus des moyens de fermeture (5), par exemple une fermeture velcro, une fermeture magnétique ou une fermeture par encliquetage.

14. Dispositif selon l'une des revendications 1 à 13, **caractérisé en ce que**, au niveau du corps protecteur (2) et/ou au niveau de l'élément de sangle (1), sont prévus des moyens de logement (18), par exemple un oeillet pour un moyen de fixation, par exemple une serrure.

15. Dispositif selon l'une des revendications 1 à 14, **caractérisé en ce que**, au niveau d'un bord (14) du corps protecteur (2), est disposé, au moins à certains endroits, un élément déformable plastiquement (15), plus particulièrement une entretoise déformable plastiquement.
